# EUROPEAN PATENT APPLICATION

(11) **EP 4 729 360 A1**
(43) Date of publication of application: **22.04.2026**
(21) Application number: 24825720.6
(22) Date of filing: 05.06.2024
(51) Int. Cl.: B60Q 1/04, B60Q 1/00, B60Q 1/08

(54) **VEHICULAR LAMP AND CONTROL METHOD FOR VEHICULAR LAMP**

(30) Priority: 19.06.2023 JP 2023100041
(71) Applicant: Koito Manufacturing Co., Ltd., Shinagawa-ku, Tokyo 141-0001 (JP)
(72) Inventor: OSHIO, Hirohiko, Shizuoka-shi Shizuoka 424-8764 (JP); WATANABE, Shigeyuki, Shizuoka-shi Shizuoka 424-8764 (JP)
(74) Representative: Algemeen Octrooi- en Merkenbureau B.V.
(86) International application number: PCT/JP2024/020539
(87) International publication number: WO 2024/262313

(57) **Abstract**

A vehicle lamp includes: a combination unit (11A) including a low beam unit (18) that projects a low beam light distribution pattern and a high beam unit (20) that projects a high beam light distribution pattern above the low beam light distribution pattern. The high beam unit (20) is capable of road surface drawing. The combination unit (11A) is capable of switching between a first irradiation direction in which the low beam light distribution pattern irradiates a predefined low beam region and a second irradiation direction lower than the first irradiation direction. The high beam unit (20) is configured to execute road surface drawing and illuminate a road surface to complement the low beam light distribution pattern, when the first combination unit (11A) is directed in the second irradiation direction.

## Description

### TECHNICAL FIELD

The present invention relates to a vehicle lamp that can be mounted on a vehicle such as a car. The present invention also relates to a control apparatus for such a vehicle lamp.

### BACKGROUND ART

In the related art, a vehicle lamp system with a low-beam irradiation lamp, a high beam irradiation lamp, and an image formation apparatus mounted on each of a pair of left and right headlamps is known (see, for example, patent literature 1). In this vehicle lamp system, the left and right image formation apparatuses can project images different from each other. This allows the left and right image formation apparatuses to be used for different purposes. For example, one image formation apparatus selectively illuminates a pedestrian in front of the vehicle, while the other image formation apparatus draws a driving lane of the driver's vehicle on the road surface.

### RELATED-ART LITERATURE

### PATENT LITERATURE

Patent Literature 1: WO2015/033900

### SUMMARY OF INVENTION

### TECHNICAL PROBLEM

We have reviewed the above vehicle lamp and have come to recognize the following issues. One idea to design a vehicle lamp is to use a high beam irradiation lamp for image formation (e.g., as road surface drawing) instead of using it exclusively for a high beam. This means realizing road surface drawing by exploiting the variable light distribution pattern function of high beam units such as those for ADB (Adaptive Driving Beam) capable of changing a light distribution pattern as it is projected for irradiation, which units are already realized.

Lamps with dual capabilities for both high beams and road surface drawing make a unit dedicated to road surface drawing unnecessary, which can be advantageous for miniaturization and cost reduction of vehicle lamps. A high beam is projected to a relatively far distance, while road surface drawing is often projected relatively near. To accommodate this, the dual-use lamp may be configured to switch the irradiation direction upward or downward so that the irradiation direction is lower during the execution of road surface drawing than during a high beam.

In general, a configuration may be adopted in which a high beam unit and a low beam unit that projects a low beam are integrally driven by a single actuator. If the irradiation direction of the above-mentioned high beam unit capable of road surface drawing is switched downward for road surface drawing in this case, the low beam irradiation direction of the low beam unit will also be directed downward at the same time. In other words, the low beam will illuminate a place below the place that should originally be illuminated in association with the execution of road surface drawing. As a result, there will be a concern for insufficient brightness in front of the vehicle and reduced forward visibility.

In this background, an illustrative purpose of an embodiment of the present invention is to provide a vehicle lamp capable of providing for both road surface drawing and forward visibility.

### SOLUTION TO PROBLEM

A vehicle lamp according to an embodiment of the present invention includes: a first combination unit including a low beam unit that projects a low beam light distribution pattern and a high beam unit that projects a high beam light distribution pattern above the low beam light distribution pattern. The high beam unit is capable of road surface drawing. The first combination unit is capable of switching between a first irradiation direction in which the low beam light distribution pattern irradiates a predefined low beam region and a second irradiation direction lower than the first irradiation direction. The high beam unit is configured to execute road surface drawing and illuminate a road surface to complement the low beam light distribution pattern, when the first combination unit is directed in the second irradiation direction.

According to this embodiment, the high beam unit executing road surface drawing can be used to illuminate the road surface to complement the low beam light distribution pattern. Therefore, it is possible to provide a vehicle lamp capable of providing for both road surface drawing and forward visibility.

The first combination unit may include: a support that supports the low beam unit and the high beam unit; and an actuator that drives the support to switch between the first irradiation direction and the second irradiation direction. By configuring the lamp in this way, the radiation direction of the combination unit can be switched by using the actuator to drive the high beam unit and the low beam unit in an integrated manner.

The high beam unit may include a pattern generator. The pattern generator may be configured to generate a road surface drawing pattern with one part of the pattern generator and generate an auxiliary light distribution pattern for complementing the low beam light distribution pattern with another part of the pattern generator, when the first combination unit is directed in the second irradiation direction. By configuring the lamp in this way, both a road surface drawing pattern and an auxiliary light distribution pattern can be generated in the pattern generator of the high beam unit, thereby providing for both road surface drawing and forward visibility.

The auxiliary light distribution pattern may be defined to at least partially illuminate a portion of the predefined low beam region deviated from the low beam light distribution pattern when the first combination unit is directed in the second irradiation direction. By configuring the lamp in this way, it is possible to compensate for reduction in the brightness on the road surface due to downward shift of the low beam light distribution pattern produced when the irradiation direction of the combination unit is switched for road surface drawing.

The auxiliary light distribution pattern is defined to form at least an elbow point of a cut-off line of the low beam light distribution pattern. By configuring the lamp in this way, it is possible to create a light distribution pattern that approximates the low beam light distribution pattern as originally intended by using an auxiliary light distribution pattern.

The first combination unit may be configured to switch, when a predetermined event occurs while the first combination unit is directed in the first irradiation direction and the high beam unit projects the high beam light distribution pattern, the first combination unit from the first irradiation direction to the second irradiation direction to execute road surface drawing to alert of the event. By configuring the lamp in this way, it is possible to let the driver know about the event in preference of high beam projection.

A vehicle lamp may further include: a second combination unit paired with the first combination unit and including a low beam unit that projects a low beam light distribution pattern and a high beam unit that projects a high beam light distribution pattern above the low beam light distribution pattern, the high beam unit being capable of road surface drawing, and the second combination unit being capable of switching between a first irradiation direction in which the low beam light distribution pattern irradiates a predefined low beam region and a second irradiation direction lower than the first irradiation direction. The second combination unit may be configured to direct the second combination unit in the first irradiation direction when the first combination unit is directed in the second irradiation direction. The first combination unit may be mounted on a first headlamp unit of a pair of headlamp units, and the second combination unit may be mounted on a second headlamp unit of the pair of headlamp units. By configuring lamp in this way, it is possible to irradiate a predefined low beam region by using the second combination unit when road surface drawing is executed by the high beam unit of the first combination unit. It is therefore possible to provide a vehicle lamp capable of providing for both road surface drawing and forward visibility.

Another embodiment of the present invention also relates to a vehicle lamp. The vehicle lamp includes: a pair of combination units each including a low beam unit that projects a low beam light distribution pattern and a high beam unit that projects a high beam light distribution pattern above the low beam light distribution pattern. The high beam unit is capable of road surface drawing. Each combination unit is capable of switching between a first irradiation direction in which the low beam light distribution pattern irradiates a predefined low beam region and a second irradiation direction lower than the first irradiation direction. The pair of combination units are configured such that, when one combination unit is directed in the second irradiation direction, the high beam unit of the one combination unit executes road surface drawing, and the other combination unit is directed in the first irradiation direction.

According to this embodiment, it is possible to irradiate, when road surface drawing is executed by the high beam unit of one combination unit, a predefined low beam region by using the other combination unit. Therefore, it is possible to provide a vehicle lamp capable of providing for both road surface drawing and forward visibility.

Still another embodiment of the present invention relates to a control apparatus for a vehicle lamp. The vehicle lamp includes a combination unit including a low beam unit that projects a low beam light distribution pattern and a high beam unit that projects a high beam light distribution pattern above the low beam light distribution pattern. The high beam unit is capable of road surface drawing. The combination unit is capable of switching between a first irradiation direction in which the low beam light distribution pattern irradiates a predefined low beam region and a second irradiation direction lower than the first irradiation direction. The control apparatus is configured to cause the high beam unit to execute road surface drawing and illuminate a road surface to complement the low beam light distribution pattern, when the combination unit is directed in the second irradiation direction.

Optional combinations of the aforementioned constituting elements, and mutual substitution of constituting elements and implementations of the present invention between methods, apparatuses, systems, computer programs, recording mediums, etc. may also be practiced as additional modes of the present invention.

### ADVANTAGEOUS EFFECTS OF INVENTION

According to the present invention, it is possible to provide a vehicle lamp capable of providing for both road surface drawing and forward visibility.

### BRIEF DESCRIPTION OF DRAWINGS

[Fig. 1] Fig. 1 schematically shows a state in which the vehicle lamp according to the embodiment is mounted on a vehicle.
[Fig. 2] Fig. 2 is a schematic perspective view showing a schematic configuration of the vehicle lamp according to the embodiment.
[Fig. 3] Fig. 3 schematically shows the A-A line cross section of the vehicle lamp shown in Fig. 2.
[Fig. 4] Fig. 4A and Fig. 4B schematically show illustrative light distribution patterns of the vehicle lamp according to the embodiment.
[Fig. 5] Fig. 5A to Fig. 5E schematically show examples of road surface drawing patterns according to the embodiment.
[Fig. 6] Fig. 6A and Fig. 6B schematically show an exemplary operation that can be executed in the vehicle lamp according to the embodiment.
[Fig. 7] Fig. 7A to Fig. 7D schematically show an exemplary operation of the vehicle lamp according to the embodiment.
[Fig. 8] Fig. 8 schematically shows how the light distribution pattern shown in Fig. 7D appears on the road surface.
[Fig. 9] Fig. 9A and Fig. 9B schematically show other examples of the auxiliary light distribution patterns according to the embodiment.
[Fig. 10] Figs. 10A to 10D relate to the embodiment and schematically show an exemplary operation of the vehicle lamp according to the embodiment.
[Fig. 11] Fig. 11A and Fig. 11B schematically show illustrative light distribution patterns of the vehicle lamp according to the embodiment.
[Fig. 12] Fig. 12 schematically shows how the light distribution patterns shown in Fig. 11A and Fig. 11B appear on the road surface.
[Fig. 13] Fig. 13 schematically shows an illustrative light distribution pattern of the vehicle lamp according to the embodiment.

### DESCRIPTION OF EMBODIMENTS

Hereinafter, the invention will be described based on preferred embodiments with reference to drawings. The embodiments do not limit the scope of the invention but exemplify the invention. Not all of the features and the combinations thereof described in the embodiments are necessarily essential to the invention. Identical or like constituting elements, members, processes shown in the drawings are represented by identical symbols and a duplicate description will be omitted as appropriate. The scales and shapes of the parts shown in the figures are defined for convenience's sake to make the explanation easy and shall not be interpreted limitatively unless otherwise specified. Terms like "first", "second", etc. used in the specification or the claims do not indicate an order or importance by any means and are used to distinguish a certain feature from the others. Those of the members that are not material to the description of the embodiments are omitted in the drawings.

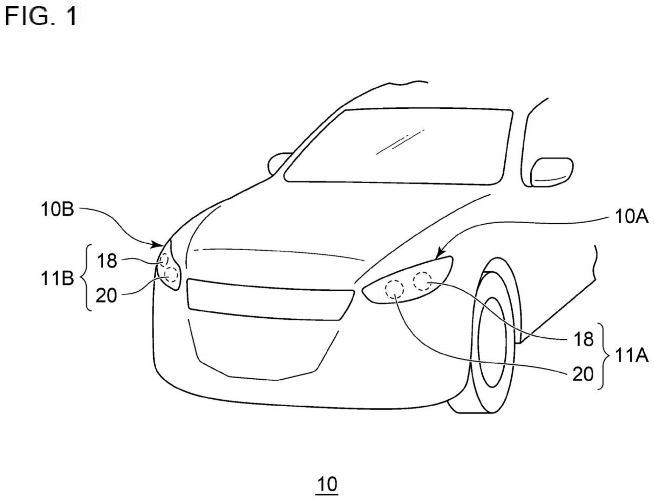

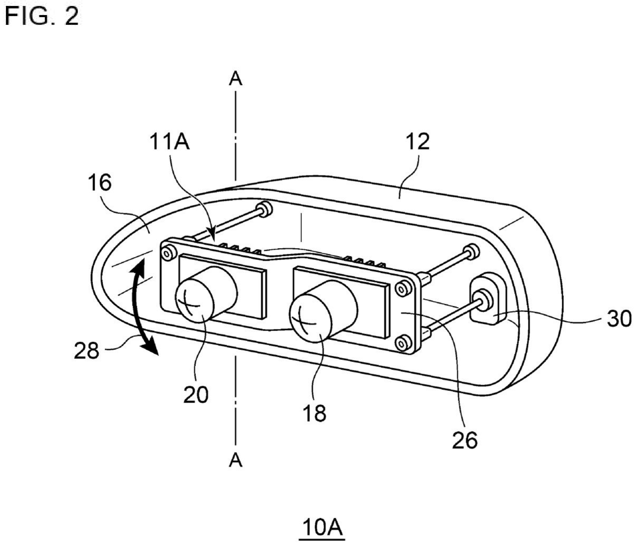

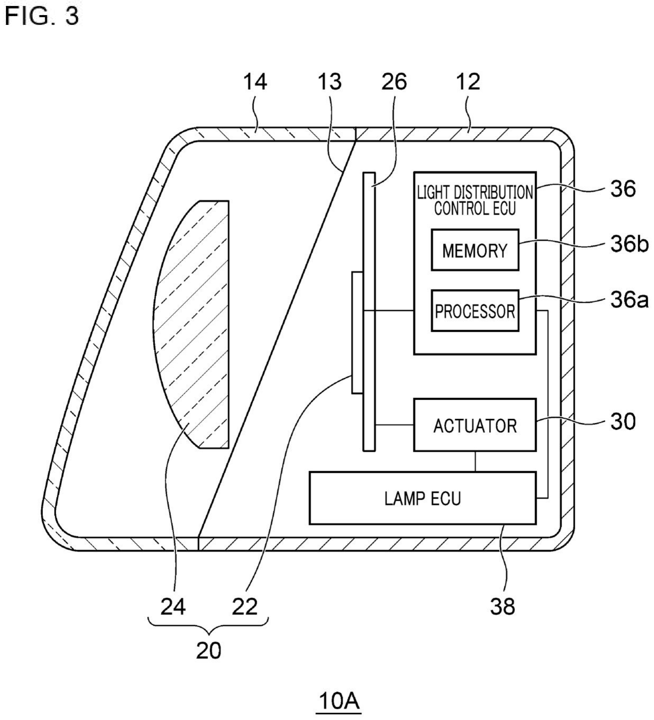

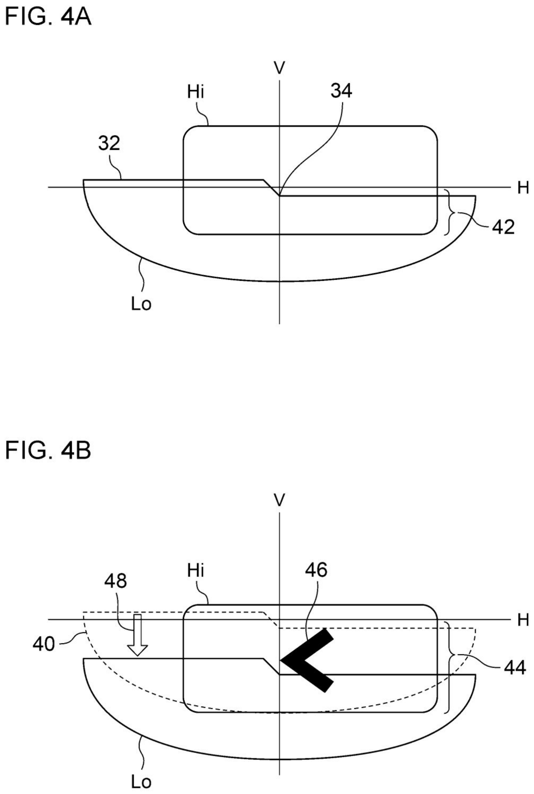

Fig. 1 schematically shows a state in which the vehicle lamp according to the embodiment is mounted on a vehicle. Further, Fig. 2 is a schematic perspective view showing a schematic configuration of the vehicle lamp according to the embodiment, and Fig. 3 schematically shows the A-A line cross section of the vehicle lamp shown in Fig. 2. Fig. 4A and Fig. 4B schematically show illustrative light distribution patterns of the vehicle lamp according to the embodiment. Figs. 4A and 4B schematically show light distribution patterns projected onto a virtual vertical screen in front of the vehicle lamp.

The vehicle lamp 10 according to the embodiment is a vehicle headlamp apparatus having a pair of headlamp units 10A, 10B arranged on the left and right sides of the front of the vehicle. The vehicle lamp 10 is equipped with a pair of combination units 11A, 11B. One combination unit 11A is mounted on one headlamp unit 10A, and the other combination unit 11B is mounted on the other headlamp unit 10B. Fig. 2 and Fig. 3 show one headlamp unit 10A and the combination unit 11A inside.

The pair of headlamp units 10A, 10B generally have a horizontally symmetrical structure and are configured in the substantially same manner. Therefore, the configuration of one headlamp units 10A and one combination unit 11A will be described to represent the pair. The other headlamp unit 10B and the other combination unit 11B are configured in the same manner so that a duplicate description is omitted.

The headlamp unit 10A is equipped with a lamp body 12 having a front opening 13 and a translucent cover 14 mounted on the lamp body 12 to cover the front opening 13. The lamp body 12 and the translucent cover 14 constitute the housing of the headlamp unit 10A. The combination unit 11A is provided in a lamp chamber 16, which is the internal space of this lamp housing. Normally, the lamp body 12 is made of, for example, an appropriate material such as general-purpose resin material, and the translucent cover 14 is made of a suitable translucent material such as a translucent synthetic resin material or glass. It is noted that Fig. 2 shows, for the convenience of explanation, a state in which the translucent cover 14 is removed from the lamp body 12 to show the internal components of the headlamp unit 10A such as the combination unit 11A clearly.

The combination unit 11A is equipped with a low beam unit 18, a high beam unit 20, a support 26 supporting the low beam unit 18 and the high beam unit 20, and an actuator 30 integrally driving the low beam unit 18 and the high beam unit 20.

The low beam unit 18 is configured to project a low beam light distribution pattern Lo. The low beam unit 18 is equipped with a light source such as an LED and an optical system for projecting a light from the light source in front of the vehicle. Any known optical configuration for forming the low beam light distribution pattern Lo can be adopted in the low beam unit 18.

An example of the low beam light distribution pattern Lo is shown in Fig. 4A. As is known, the low beam light distribution pattern Lo irradiates a predetermined region below a horizontal line H. A cut-off line 32 of the low beam light distribution pattern Lo is located at or near the horizontal line H. The cut-off line 32 may have a cut-off line on the side of the oncoming traffic lane extending parallel to the horizontal line H to the right of the vertical line V, a cut-off line on the side of the driver's traffic lane extending parallel to the horizontal line H at a position higher than the cut-off line on the side of the oncoming traffic lane to the left of the vertical line V, and a sloping cut-off line connecting the cut-off line on the side of the oncoming traffic lane and the cut-off line on the side of the driver's traffic lane. The cut-off line 32 may have an elbow point 34, which is the boundary (intersection point) between the cut-off line on the side of the oncoming traffic lane and the sloping cut-off line.

The high beam unit 20 is configured to project a high beam light distribution pattern Hi. Fig. 3 schematically shows a vertical cross section of the high beam unit 20. The high beam unit 20 is equipped with a pattern generator 22 and a projection optical system 24.

An example of the high beam light distribution pattern Hi is shown in Fig. 4A. As is known, the high beam light distribution pattern Hi is a light distribution pattern for illuminating a farther distance compared to the low beam light distribution pattern Lo and is projected to a predetermined region above the horizon H. As shown in the figure, a portion of the high beam light distribution pattern Hi may be projected below the cut-off line 32 of the low beam light distribution pattern Lo and overlap with the low beam light distribution pattern Lo.

The pattern generator 22 has a large number of pixels arranged in two dimensions, and each pixel can be controlled independently. The pattern generator 22 can generate a variety of light distribution patterns by controlling these pixels individually (e.g., turning them on or off). For example, a bright region in the light distribution pattern is formed by ON pixels, and a dark region in the light distribution pattern is formed by OFF pixels. In order to produce a light distribution pattern at a high resolution, the pattern generator 22 may have at least 1000 pixels or at least 10000 pixels.

The pattern generator 22 of this embodiment may be a device comprised of a large number of light-emitting elements (e.g., LEDs) arranged in a matrix. In this case, each individual light-emitting element functions as a pixel. A high-definition apparatus like this can also be called a pixel light or a matrix LED. For example, the pattern generator 22 may be a matrix LED light source with 64 rows and 256 columns.

Alternatively, a pattern generator of an alternative form may be used in place of a self-luminous pattern generators 22 like the above. For example, a light source may be used in combination with a MEMS (Micro Electro Mechanical Systems) device such as a micromirror device or a liquid crystal display may be used.

So-called ADB (Adaptive Driving Beam) control, which dynamically and adaptively controls the high beam light distribution pattern Hi based on the vehicle's ambient conditions, may be applied to the pattern generator 22. As is known, ADB control can reduce or prevent glare that may be inflicted on a vehicle in front by detecting the vehicle in front, such as a leading vehicle or an oncoming vehicle located in front of the driver's vehicle, and forming a dark region in a portion within the high beam light distribution pattern Hi corresponding to the vehicle in front.

The pattern generator 22 is not only capable of forming the high beam light distribution pattern Hi but also capable of road surface drawing. The pattern generator 22 may generate a light distribution pattern for road surface drawing (hereinafter, referred to as a road surface drawing pattern) in place of the high beam light distribution pattern Hi (which is inclusive of a ADB light distribution pattern). Alternatively, the pattern generator 22 may generate a road surface drawing pattern along with the high beam light distribution pattern Hi.

The road surface drawing pattern is inclusive of various patterns that should be drawn on the road surface, such as desired letters, graphic forms, symbols, etc. By road surface drawing, various information can be presented. For example, the driver of the vehicle, pedestrians around the driver's vehicle, drivers of other vehicles, etc. can be alerted, or a message welcoming the driver entering the vehicle may be displayed on the ground near the vehicle.

The projection optical system 24 is configured to project the light distribution pattern generated by the pattern generator 22 outside the vehicle lamp 10. The projection optical system 24 is equipped with at least one optical member (e.g., a lens or a reflector). Typically, the projection optical system 24 may be, as illustrated, equipped with a projection lens that receives the light from the pattern generator 22 and projects the light outside the vehicle lamp 10 through the translucent cover 14. Alternatively, the projection optical system 24 may be an inverting optical system that inverts and projects the light distribution pattern generated on the pattern generator 22.

The support 26 is supported by the lamp body 12 in the lamp chamber 16 so that the support 26 can be tilted with respect to the lamp body 12. The support 26 may be, by way of example, a support member (e.g., a support bracket) having a plate-like part arranged in such a way that one surface thereof faces frontward (toward the translucent cover 14) and the other surface faces rearward (toward the lamp body 12). The support 26 may be made of a suitable material such as a synthetic resin material or a metal material. The support 26 may function as a heat dissipation member for dissipating the heat emitted by the pattern generator 22, or such a heat dissipation member may be mounted on the support 26.

As mentioned above, the low beam unit 18 and the high beam unit 20 are supported by the support 26 as described above. The low beam unit 18 and the high beam unit 20 may be fixed to the support 26, in which case the relative positions of the low beam unit 18 and the high beam unit 20 on the support 26 remain unchanged.

Alternatively, at least one of the low beam unit 18 and the high beam unit 20 may be mounted on the support 26 so that the attitude with respect to the support 26 can be adjusted for, for example, initial adjustment work during the manufacturing phase or maintenance. For example, the low beam unit 18 (or the high beam unit 20) may be mounted on the support 26 via an aiming adjustment mechanism such as an aiming screw.

The actuator 30 is configured to drive the combination unit 11A in such a way as to change the attitude of the combination unit 11A. For example, the actuator 30 may be a so-called leveling actuator that drives the combination unit 11A in such a way as to change the attitude of the combination unit 11A in the vertical direction. The drive shaft of the actuator 30 is coupled to the support 26, whereby the actuator 30 can drive the support 26. The actuator 30 may be arranged in the light chamber 16 on the side of the lamp body 12 in relation to the combination unit 11A (e.g., below or behind the combination unit 11A). The structure to the support the actuator 30 and the support 26 in the lamp body 12 will not be detailed here as various known configurations can be adopted as appropriate.

Since the low beam unit 18 and the high beam unit 20 are supported by the support 26, the actuator 30 can drive the low beam unit 18 and the high beam unit 20 integrally (i.e., while maintaining the relative positions of the low beam unit 18 and the high beam unit 20). The irradiation direction of the combination unit 11A can be changed by activating the actuator 30 and changing the attitude (angle) of the combination unit 11A with respect to the lamp body 12. In other words, the orientation of the light projected by the vehicle lamp 10 outside can be set in a desired direction.

For example, the combination unit 11A can switch between the first irradiation direction, which is usually used to project the low beam light distribution pattern Lo, and the second irradiation direction, which is lower as compared to the first irradiation direction. As schematically indicated by an arrow 28 in Fig. 2, the actuator 30 can drive the support 26 to switch between the first irradiation direction and the second irradiation direction.

As shown in Fig. 3, the high beam unit 20 is equipped with a light distribution control electronic control unit (ECU) 36 that controls the pattern generator 22. The light distribution control ECU 36 may be mounted on the support 26. Further, the headlamp unit 10A is equipped with a lamp ECU 38 that controls the vehicle lamp 10. The lamp ECU 38 may be mounted on the lamp body 12. The ECU can be implemented by a combination of a processor (hardware) such as a CPU (Central Processing Unit) and a microcomputer and a software program executed by the processor (hardware).

The light distribution control ECU 36 is equipped with a processor 36a and a memory 36b. The processor 36a is configured to receive a command signal from the lamp ECU 38, determine the light distribution pattern that should be generated based on the command signal, and generate the determined light distribution pattern on the pattern generator 22. The function of the processor 36a to control the pattern generator 22 is implemented in the processor 36a by causing the processor 36a to execute a software program for light distribution control stored in the memory 36b. The memory 36b may include a non-volatile memory and/or a volatile memory. In addition to the software program, the memory 36b stores data necessary for the operation of the lamp ECU 38 or the execution of the software program and data generated by the execution of the software program.

The lamp ECU 38 acquires vehicle information required to control the vehicle lamp 10 from the higher-level controller and controls the combination units 11A, 11B (i.e., the low beam unit 18, the high beam unit 20, and the actuator 30) based on this information. This high-level controller is an ECU that is located outside the vehicle lamp 10 to control the entire vehicle or a part thereof integrally and can also be called a vehicle ECU. The lamp ECU 38 can communicate with a vehicle ECU 300 through a vehicle-mounted network that complies with a network protocol such as CAN (Controller Area Network) or LIN (Local Interconnect Network) or through other appropriate communication networks and can receive the vehicle information from the vehicle ECU via such a network.

For example, the lamp ECU 38 may control the operation of the low beam unit 18 (e.g., on-off, light intensity, etc.) based on vehicle information. The lamp ECU 38 may control the operation of the high beam unit 20 (e.g., on-off, light distribution pattern, etc.) based on the vehicle information. The lamp ECU 38 may generate the command signal mentioned above based on the vehicle information and transmit the signal to the light distribution control ECU 36. The lamp ECU 38 may control the operation of the actuator 30 (e.g., switching from the first irradiation direction to the second irradiation direction, or from the second irradiation direction to the first irradiation direction) based on the vehicle information.

Fig. 4A shows the low beam light distribution pattern Lo and the high beam light distribution pattern Hi projected from the combination unit 11A when the combination unit 11A is directed in the first irradiation direction. Fig. 4B shows the low beam light distribution pattern Lo and the high beam light distribution pattern Hi projected from the combination unit 11A when the combination unit 11A is directed in the second irradiation direction.

The low beam light distribution pattern Lo irradiates a predefined low beam region 40 (indicated by a dashed line in Fig. 4B for understanding) when the combination unit 11A is directed in the first irradiation direction. As understood from a comparison between Fig. 4A and Fig. 4B, the second irradiation direction is lower than the first irradiation direction so that the low beam light distribution pattern Lo is projected to a position shifted downward from the predefined low beam region 40 as indicated by an arrow 48 when the combination unit 11A is directed in the second irradiation direction.

For convenience of explanation, the portion of the high beam light distribution pattern Hi, generated by the pattern generator 22 when the combination unit 11A is directed in the first irradiation direction, that irradiates, as shown in Fig. 4A, a region below the horizon line H will be referred to as a first portion 42. Further, as shown in Fig. 4B, the portion of the high beam light distribution pattern Hi irradiating a region below the horizontal line H when the combination unit 11A is directed in the second irradiation direction will be referred to as a second portion 44.

Like the low beam light distribution pattern Lo, the high beam light distribution pattern Hi also irradiates a downwardly shifted position when the combination unit 11A is directed in the second irradiation direction. Thus, as understood from a comparison between Fig. 4A and Fig. 4B, the second portion 44 is wider in the vertical direction (in the direction of the vertical line V) than the first portion 42.

Of the light emitted from vehicle lamp 10, the light directed below the horizon H is used for road surface drawing. In other words, the light directed above the horizon H does not reach the road surface and so cannot be used for road surface drawing. When the combination unit 11A is directed in the first irradiation direction, therefore, the high beam unit 20 (i.e., the pattern generator 22) can only utilize the first portion 42 for the generation of the road surface drawing pattern.

When the combination unit 11A is directed in the second irradiation direction, on the other hand, the high beam unit 20 can use the second portion 44, which is wider than the first portion 42, to generate the road surface drawing pattern. Fig. 4B shows an example of a road surface drawing pattern 46 that can be generated in the second portion 44. The area of the first portion 42 and the second portion 44 is equivalent to the number of pixels on the pattern generator 22. Therefore, the resolution of the road surface drawing pattern can be improved by switching the combination unit 11A from the first irradiation direction to the second irradiation direction.

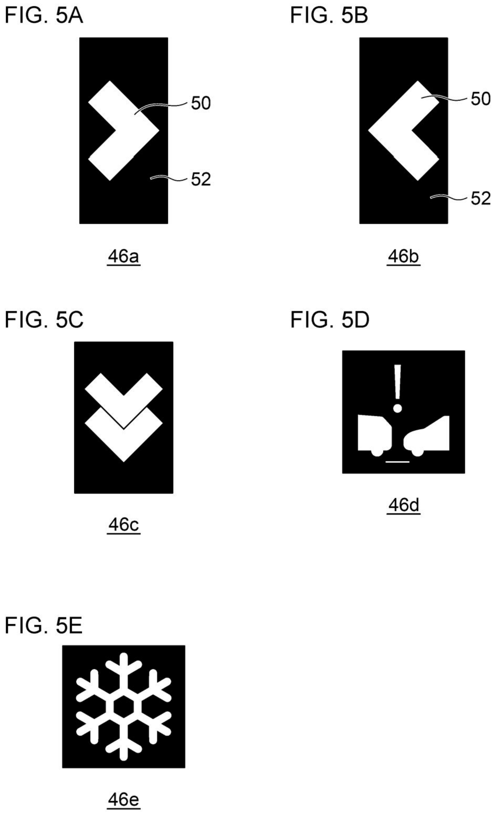

Fig. 5A to Fig. 5E schematically show examples of road surface drawing patterns according to the embodiment. The road surface drawing pattern as illustrated may be projected to the road surface in front of the vehicle while the vehicle is running. Figs. 5A and 5B show lane keep assist warning marks 46a, 46b. The mark is drawn on the road surface to prompt the driver to prevent deviation from the lane the vehicle is running in. The right-pointing arrow shown in Fig. 5A is used to prevent deviation from the driving lane to the left, and the left-pointing arrow shown in Fig. 5B is used to prevent deviation from the driving lane to the right. By way of example, the right-pointing arrow of Fig. 5A may be drawn on the road surface from the headlamp unit 10A on the left side as seen from the driver, and the left-pointing arrow of Fig. 5B may be drawn on the road surface from the headlamp unit 10B on the right side.

The pattern generator 22 may represent the road surface drawing pattern 46 by a bright region 50. In order to show the contour of the road surface drawing pattern 46 clearly, the pattern generator 22 may generate a dark region 52 around the road surface drawing pattern. As mentioned above, the bright region 50 is generated by turning on the pixels at the positions on the pattern generator 22 corresponding to the bright region 50, and the dark region 52 is generated by turning off the pixels at the positions on the pattern generator 22 corresponding to the dark region 52. In this way, the arrows representing the lane keep assist warning marks 46a, 46b brightly illuminate the road surface as shown in Fig. 5A and Fig. 5B by way of example.

When the pattern generator 22 simultaneously generates a further light distribution pattern (e.g., the high beam light distribution pattern Hi or an auxiliary light distribution pattern described below) along with the road surface drawing pattern 46, the pattern generator 22 may generate the dark region 52 between the bright region 50 of the road surface drawing pattern 46 and the bright region of the further light distribution pattern for distinction between the road surface drawing pattern 46 and the further light distribution pattern.

As an alternative, the pattern generator 22 may represent the road surface drawing pattern 46 by a dark region. The pattern generator 22 may generate a dark region corresponding to the road surface drawing pattern 46 within the bright region of the further light distribution pattern such as the high beam light distribution pattern Hi or the auxiliary light distribution pattern described below. In this case, the arrow mark will be a dark portion in the brightly lit background around, in contrast to the lane keep assist warning marks 46a, 46b shown in Fig. 5A and Fig. 5B. This also makes it possible to generate the road surface drawing pattern 46 on the road surface in the form of a contrast between the bright region and the dark region.

The pattern generator 22 may configure the brightness of the road surface drawing pattern 46 to be different from that of the low beam light distribution pattern Lo. For example, the pattern generator 22 may irradiate the bright region 50 of the road surface drawing pattern 46 (in the case the road surface drawing pattern 46 is represented by the dark region, the bright region around) brighter than the low beam light distribution pattern Lo. In addition to or in place of that, the pattern generator 22 may project the road surface drawing pattern 46 in a color (e.g., a non-white color such as red, orange, blue) different from that of the low beam light distribution pattern Lo.

This is effective in improving the visibility of the road surface drawing pattern 46. This makes it easier to distinguish the road surface drawing pattern 46 from the low beam light distribution pattern Lo in the case at least portion of the road surface drawing pattern 46 generated by the pattern generator 22 overlaps the low beam light distribution pattern Lo.

Fig. 5C also shows a reverse run warning mark 46c to inform the driver that the vehicle is running in the wrong direction. Fig. 5D shows a collision risk warning mark 46d to inform the driver that the driver's vehicle is at risk of colliding with a vehicle in front. Fig. 5E shows a warning mark 46e to inform the driver that the vehicle is running on a slippery road surface such as a snowy surface or a frozen surface.

The road surface drawing patterns as shown are examples, and other road surface drawing patterns are of course possible, too. For example, the road surface drawing patterns may include various marks determined by the driving situation, such as a route guidance mark that indicates a direction the driver's vehicle should be heading on the road surface, an overspeed warning mark indicating that the running speed of the driver's vehicle exceeds a speed limit, etc.

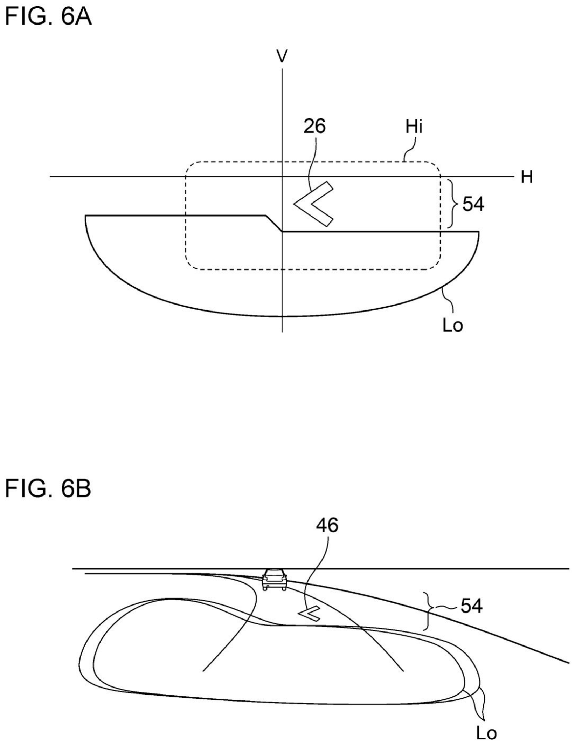

Fig. 6A and Fig. 6B schematically show an exemplary operation that can be executed in the vehicle lamp according to the embodiment. Fig. 6A shows the low beam light distribution pattern Lo and the road surface drawing pattern 46 projected from the combination unit 11A when the combination unit 11A is directed in the second irradiation direction. Fig. 6B shows how the light distribution pattern shown in Fig. 6A appears on the road surface.

In this exemplary operation, the pattern generator 22 generates only the road surface drawing pattern 46. The pattern generator 22 does not generate the high beam light distribution pattern Hi. The road surface drawing pattern 46 is a lane keep assist warning mark by way of example. As shown in Fig. 6A and Fig. 6B, the road surface drawing pattern 46 can be projected to a region 54 below the horizon line H.

Since the combination unit 11A is directed in the second irradiation direction in this case, the low beam light distribution pattern Lo is projected to a position shifted downward from the predefined low beam region (i.e., the low beam light distribution pattern Lo produced when the combination unit 11A is directed in the first irradiation direction) as described above. The other combination unit 11B is also directed in the second irradiation direction, and the low beam light distribution pattern Lo thereof is also shifted downward.

Therefore, the region 54 below the horizon H, which would have been illuminated by the low beam light distribution pattern Lo if the combination units 11A, 11B were directed in the first irradiation direction, is deviated from the low beam light distribution pattern Lo. In this exemplary operation, the low beam light distribution pattern Lo will illuminate a place below the place that should originally be illuminated, in association with the execution of road surface drawing. As a result, there is a concern for insufficient brightness in front of the vehicle and reduced forward visibility.

In the embodiment, therefore, the high beam unit 20 is configured to illuminate the road surface to complement the low beam light distribution pattern Lo at the same time as executing road surface drawing, when the combination unit 11A is directed in the second irradiation direction. In this way, the high beam unit 20 executing road surface drawing can be used to illuminate the road surface to complement the low beam light distribution pattern Lo. Therefore, it is possible to provide the vehicle lamp 10 capable of providing for both road surface drawing and forward visibility.

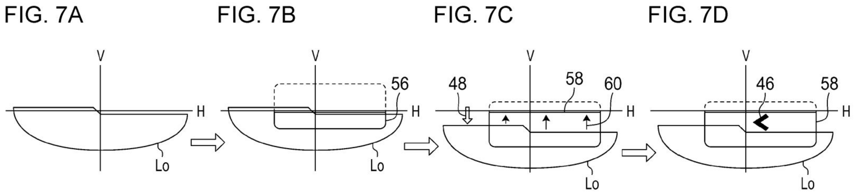

Fig. 7A to Fig. 7D schematically show an exemplary operation of the vehicle lamp according to the embodiment. The operation of switching from the low beam to road surface drawing will be explained. The method to control the vehicle lamp according to the embodiment includes a step of switching the combination units 11A, 11B from the first irradiation direction to the second irradiation direction (see Fig. 7C), and a step of causing the high beam unit 20 to operate to execute road surface drawing and to illuminate the road surface so as to complement the low beam light distribution pattern Lo when the combination units 11A, 11B are directed in the second irradiation direction (see Fig. 7D).

In the initial state shown in Fig. 7A, the combination units 11A, 11B are directed in the first irradiation direction, and the low beam light distribution pattern Lo is projected from the low beam unit 18. When a certain event occurs while the low beam light distribution pattern Lo is being projected, the operation of the combination units 11A, 11B for road surface drawing is started.

A certain event is an event that is predetermined to prompt execution of road surface drawing and refers to, for example, an event upon which the road surface drawing pattern exemplified in Figs 5A to 5E should be projected. Information indicating the occurrence of an event may be included in the vehicle information given to the lamp ECU 38 from the vehicle side. The lamp ECU 38 responds to the vehicle information, generates a command signal requesting road surface drawing, and transmits the signal to the light distribution control ECU 36 and the actuator 30.

The light distribution control ECU 36 receives the command signal from the lamp ECU 38, determines the light distribution pattern that should be generated based on the command signal, and generates the determined light distribution pattern on the pattern generator 22. First, the pattern generator 22 generates an initial light distribution pattern 56 when the combination units 11A, 11B are directed in the first irradiation direction (i.e., before the irradiation direction is switched from the first irradiation direction to the second irradiation direction) as shown in Fig. 7B. The initial light distribution pattern 56 may be defined to irradiate at least a portion of the region that overlaps the low beam light distribution pattern Lo. In the illustrated example, the initial light distribution pattern 56 is defined to irradiate a portion of the region below the horizon H that can be irradiated by the pattern generator 22 (the first portion 42 shown in Fig. 4A) and not to irradiate the region above the horizon H.

The actuator 30 receives the command signal from the lamp ECU 38 and operates in response to the command signal to switch the irradiation direction of the combination units 11A, 11B from the first irradiation direction to the second irradiation direction. By switching the irradiation direction (schematically indicated by the arrow 48), the low beam light distribution pattern Lo is, as shown in Fig. 7C, projected to a downwardly shifted position compared to the initial state shown in Fig. 7A and Fig. 7B.

In synchronization with the operation of switching the irradiation direction of the combination units 11A, 11B by the actuator 30, the light distribution control ECU 36 adjusts the light distribution pattern generated on the pattern generator 22. As shown in Fig. 7C, the pattern generator 22 is controlled to expand the initial light distribution pattern 56 upward (schematically indicated by an arrow 60) to generate an auxiliary light distribution pattern 58. In this process, the movement of the actuator 30 and the expansion of the light distribution pattern are synchronized so that the position of the upper edge of the auxiliary light distribution pattern 58 does not move from the driver's point of view and remains at the horizon line H.

The auxiliary light distribution pattern 58 is defined to at least partly illuminate the portion of the predefined low beam region 40 (the region irradiated by the low beam light distribution pattern Lo when the combination units 11A, 11B are directed in the first irradiation direction; see Fig. 4B), which portion is deviated from the low beam light distribution pattern Lo when the combination units 11A, 11B are directed in the second irradiation direction. In the example shown in Fig. 7A to Fig. 7D, the auxiliary light distribution pattern 58 is set to irradiate a portion of the region below the horizon H that can be irradiated by the pattern generator 22. In this way, the decrease in brightness of the road surface due to the downward shift of the low beam light distribution pattern Lo occurring when the irradiation direction of the combination units 11A, 11B is switched for road surface drawing can be compensated by the auxiliary light distribution pattern 58.

The light distribution control ECU 36 controls the pattern generator 22 to generate the road surface drawing pattern 46 when the combination units 11A, 11B are directed in the second irradiation direction. As shown in Fig. 7D, the lane keep assist warning mark is represented by a dark region within the auxiliary light distribution pattern 58 in this example.

In this way, the pattern generator 22 generates the road surface drawing pattern 46 with one part of the pattern generator 22 when the combination units 11A, 11B are directed in the second irradiation direction and generates the auxiliary light distribution pattern 58 for complementing the low beam light distribution pattern Lo with another part of the pattern generator 22.

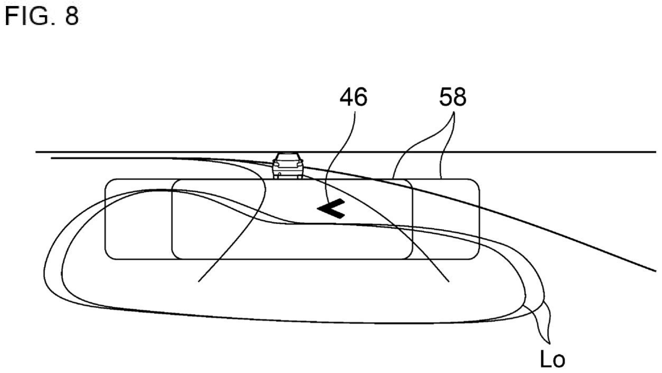

Fig. 8 schematically shows how the light distribution pattern shown in Fig. 7D appears on the road surface. Referring to Fig. 6B, the low beam light distribution pattern Lo is shifted downward in association with the execution of the road surface drawing, resulting in insufficient brightness in front of the vehicle and reduced forward visibility. Referring to Fig. 8, on the other hand, both the road surface drawing pattern 46 and the auxiliary light distribution pattern 58 are generated on the pattern generator 22 when road surface drawing is executed by the high beam unit 20, thereby providing for both road surface drawing and forward visibility.

In the control method described with reference to Fig. 7A to Fig. 7D, the pattern generator 22 first turns on the initial light distribution pattern 56, and then the irradiation direction is switched by the actuator 30, but other methods are also possible. For example, the irradiation direction may be switched by the actuator 30 from the first irradiation direction to the second irradiation direction at first, and then the pattern generator 22 may generate the auxiliary light distribution pattern 58 and the road surface drawing pattern 46.

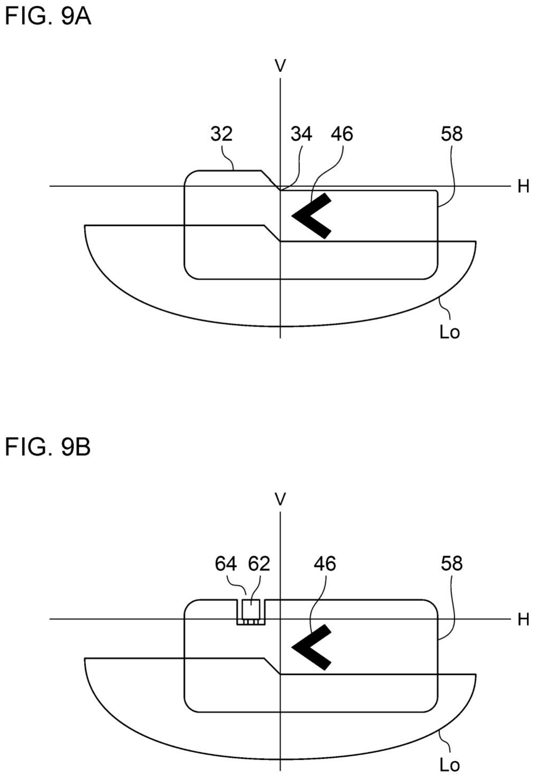

Fig. 9A and Fig. 9B schematically show other examples of the auxiliary light distribution patterns according to the embodiment. In the embodiment described above, the upper edge of the auxiliary light distribution pattern 58 is configured to be a straight line parallel to the horizontal line H. Alternatively, the auxiliary light distribution pattern 58 may be defined to form at least the elbow point 34 of the cut-off line 32 of the low beam light distribution pattern Lo, as shown in Fig. 9A. In this way, the auxiliary light distribution pattern 58 can be used to create a light distribution pattern that approximates the low beam light distribution pattern Lo as originally intended.

In another example, the auxiliary light distribution pattern 58 may be set to irradiate a region above the horizon H. For example, the auxiliary light distribution pattern 58 may include an ADB light distribution pattern, as shown in Fig. 9B. In other words, the light distribution control ECU 36 may control the pattern generator 22 to form a dark region 64 in a portion corresponding to a vehicle in front 62. In this process, as in the embodiment described above, the pattern generator 22 may illuminate a region below the horizon line to complement the low beam light distribution pattern Lo and, at the same time, generate the road surface drawing pattern 46.

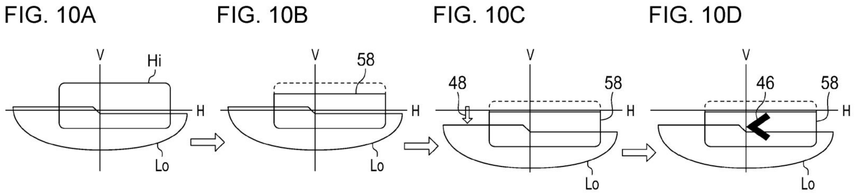

Figs. 10A to 10D relate to the embodiment and schematically show an exemplary operation of the vehicle lamp according to the embodiment. In this example, the operation of switching from a high beam to road surface drawing will be described. In the initial state shown in Fig. 10A, the combination units 11A, 11B are directed in the first irradiation direction, the low beam light distribution pattern Lo is projected from the low beam unit 18, and the high beam light distribution pattern Hi is projected from the high beam unit 20. When a predetermined event occurs while the low beam light distribution pattern Lo and high beam light distribution pattern Hi are projected, the operation of the combination units 11A, 11B for road surface drawing is started.

As shown in Fig. 10B, the pattern generator 22 switches from the high beam light distribution pattern Hi to the auxiliary light distribution pattern 58 while the combination units 11A, 11B are directed in the first irradiation direction (i.e., before the irradiation direction switches from the first irradiation direction to the second irradiation direction).

Then, as shown schematically by the arrow 48 in Fig. 10C, the irradiation direction of the combination units 11A, 11B is switched by the actuator 30 from the first irradiation direction to the second irradiation direction. The auxiliary light distribution pattern 58 and the low beam light distribution pattern Lo are projected to a downwardly shifted position. The pattern generator 22 then generates the road surface drawing pattern 46 within the auxiliary light distribution pattern 58 as shown in Fig. 7D.

In this way, when a predetermined event occurs while the combination units 11A, 11B are directed in the first irradiation direction and the high beam unit 20 projects the high beam light distribution pattern Hi, the combination units 11A, 11B can be switched from the first irradiation direction to the second irradiation direction to execute road surface drawing to alert of the event. This can let the driver know about such an event in preference to high beam irradiation.

In the control method described with reference to Fig. 10A to Fig. 10D, the pattern generator 22 first turns on the auxiliary light distribution pattern 58, and then the irradiation direction is switched by the actuator 30, but other methods are also possible. For example, the irradiation direction may be switched by the actuator 30 from the first irradiation direction to the second irradiation direction at first, and then the pattern generator 22 may generate the auxiliary light distribution pattern 58 and the road surface drawing pattern 46.

In the embodiment described above, the pair of combination units 11A, 11B perform the same operation, but the present invention is not limited to this. In certain embodiments, these combination units 11A, 11B may operate differently. Such embodiments will be described below.

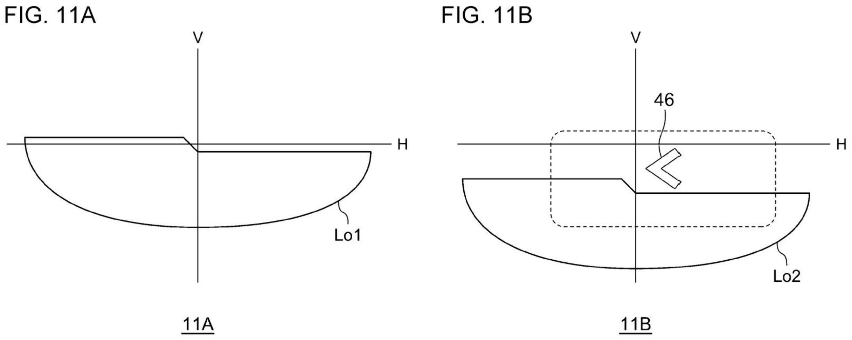

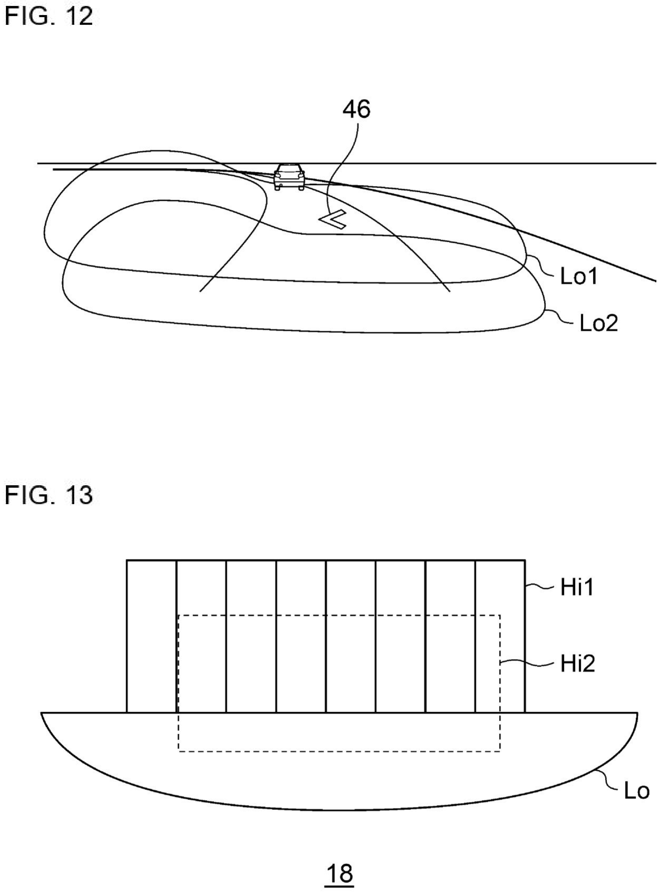

Fig. 11A and Fig. 11B schematically show illustrative light distribution patterns of the vehicle lamp according to the embodiment. Fig. 11A shows an example of the light distribution pattern of one combination unit 11A, and Fig. 11B shows an example of the light distribution pattern of the other combination unit 11B. One combination unit 11A is mounted on the headlamp unit 10A on the left side as viewed from the driver's point of view, and the other combination unit 11B is mounted on the headlamp unit 10B on the right side. Fig. 12 schematically shows how the light distribution patterns shown in Fig. 11A and Fig. 11B appear on the road surface.

The pair of combination units 11A, 11B may be configured in such a way that, when the combination unit 11B is directed in the second irradiation direction, the high beam unit 20 (i.e., the pattern generator 22) of the combination unit 11B executes road surface drawing, and the other combination unit 11A is directed in the first irradiation direction, as shown in Fig. 11A and Fig. 11B.

As shown in Fig. 11A, the combination unit 11A is directed in the first irradiation direction, and a low beam light distribution pattern Lo1 is projected from the low beam unit 18. The high beam unit 20 of the combination unit 11A is turned off, and the high beam light distribution pattern is not projected. In this case, as shown in Fig. 11B, the other combination unit 11B is directed in the second irradiation direction. In the combination unit 11B, the downwardly shifted low beam light distribution pattern Lo2 is projected from the low beam unit 18, and the road surface drawing pattern 46 is projected from the high beam unit 20.

Similarly, the pair of combination units 11A, 11B may be configured in such a way that, when the combination unit 11A is directed in the second irradiation direction, the high beam unit 20 of the combination unit 11A executes road surface drawing, and the other combination unit 11B is directed in the first irradiation direction.

This ensures that, when road surface drawing is executed by the high beam unit 20 of one combination unit 11B (or 11A), the other combination unit 11A (or 11B) can be used to illuminate the predefined low beam region with the low beam light distribution pattern Lo1, as shown in Fig. 12. Therefore, it is possible to provide the vehicle lamp 10 capable of providing for both road surface drawing and forward visibility.

A hybrid of the embodiment described with reference to Fig. 1 to Fig. 10D and the embodiment described with reference to Fig. 11A to Fig. 12 is also possible. In other words, the pair of combination units 11A, 11B may be configured in such a way that, when one combination unit 11A (or 11B) is directed in the second irradiation direction, the high beam unit 20 of the one combination unit executes road surface drawing and complements the low beam light distribution, and the other combination unit 11B (or 11A) is directed in the first irradiation direction. This can also provide the vehicle lamp 10 capable of providing for both road surface drawing and forward visibility.

The present invention is not limited to the embodiment and the variations described above. The embodiment and the variation may be combined or may be subject to further modification such as various design changes, based on the knowledge of skilled persons. The embodiment and the variation thus combined or modified are also encompassed by the scope of the present invention. New embodiments created by the combination of the embodiment and the variation described above and by the combination of the embodiment and/or the variation described above plus the variation(s) described below provide the respective advantages of embodiment, the variation, and the further variation combined.

In the embodiment described above, the low beam unit 18 is configured to project only the low beam light distribution pattern Lo, but this is not essential. In certain embodiments, the low beam unit 18 may be configured to project not only the low beam light distribution pattern Lo but also a further light distribution pattern.

Fig. 13 schematically shows an illustrative light distribution pattern of the vehicle lamp according to the embodiment. Fig. 13 illustrates a light distribution pattern of the low beam unit 18. The low beam unit 18 can project the low beam light distribution pattern Lo and a high beam light distribution pattern Hi1. The low beam unit 18 may be equipped with a first light emitting element array (e.g., an LED array) to form the low beam light distribution pattern Lo and a second light emitting element array to form the high beam light distribution pattern Hi1. The low beam unit 18 like this can also be called a BiLED unit. For understanding, Fig. 13 also shows a high beam light distribution pattern Hi2 produced by the high beam unit 20.

Further, in the embodiment described above, the pair of combination units 11A, 11b are described as being symmetrically arranged on the left and right sides of the vehicle by way of example. However, the arrangement of the pair of combination units 11A, 11b is not limited to this. For example, the pair of combination units 11A, 11B may both be mounted on the headlamp unit 10A (or 10B) on one side.

The present invention has been described by using specific language based on the embodiment. However, the embodiment merely illustrates one aspect of the principle and application of the present invention. A number of modifications and changes in the arrangement may be made in the embodiment to the extent that they do not depart from the idea of the present invention defined by the claims.

The embodiment can be represented by the following numbered items.
1. A vehicle lamp including: a first combination unit including a low beam unit that projects a low beam light distribution pattern and a high beam unit that projects a high beam light distribution pattern above the low beam light distribution pattern, the high beam unit being capable of road surface drawing, and the first combination unit being capable of switching between a first irradiation direction in which the low beam light distribution pattern irradiates a predefined low beam region and a second irradiation direction lower than the first irradiation direction,
   wherein the high beam unit is configured to execute road surface drawing and illuminate a road surface to complement the low beam light distribution pattern, when the first combination unit is directed in the second irradiation direction.
2. The vehicle lamp according to item 1, wherein the first combination unit includes:
   a support that supports the low beam unit and the high beam unit, an actuator that drives the support to switch between the first irradiation direction and the second irradiation direction.
3. The vehicle lamp according to item 1 or 2, wherein the high beam unit includes a pattern generator, and
   wherein the pattern generator is configured to generate a road surface drawing pattern with one part of the pattern generator and generate an auxiliary light distribution pattern for complementing the low beam light distribution pattern with another part of the pattern generator, when the first combination unit is directed in the second irradiation direction.
4. The vehicle lamp according to item 3, wherein the auxiliary light distribution pattern is defined to at least partially illuminate a portion of the predefined low beam region deviated from the low beam light distribution pattern when the first combination unit is directed in the second irradiation direction.
5. The vehicle lamp according to item 4, wherein the auxiliary light distribution pattern is defined to form at least an elbow point of a cut-off line of the low beam light distribution pattern.
6. The vehicle lamp according to any one of items 1 to 5, wherein the first combination unit is configured to switch, when a predetermined event occurs while the first combination unit is directed in the first irradiation direction and the high beam unit projects the high beam light distribution pattern, the first combination unit from the first irradiation direction to the second irradiation direction to execute road surface drawing to alert of the event.
7. The vehicle lamp according to any one of items 1 to 6, further including: a second combination unit paired with the first combination unit and including a low beam unit that projects a low beam light distribution pattern and a high beam unit that projects a high beam light distribution pattern above the low beam light distribution pattern, the high beam unit being capable of road surface drawing, and the second combination unit being capable of switching between a first irradiation direction in which the low beam light distribution pattern irradiates a predefined low beam region and a second irradiation direction lower than the first irradiation direction, wherein the second combination unit is configured to direct the second combination unit in the first irradiation direction when the first combination unit is directed in the second irradiation direction.
8. The vehicle lamp according to item 7, wherein the first combination unit is mounted on a first headlamp unit of a pair of headlamp units, and the second combination unit is mounted on a second headlamp unit of the pair of headlamp units.
9. A vehicle lamp including: a pair of combination units each including a low beam unit that projects a low beam light distribution pattern and a high beam unit that projects a high beam light distribution pattern above the low beam light distribution pattern, the high beam unit being capable of road surface drawing, and each combination unit being capable of switching between a first irradiation direction in which the low beam light distribution pattern irradiates a predefined low beam region and a second irradiation direction lower than the first irradiation direction,
   wherein the pair of combination units are configured such that, when one combination unit is directed in the second irradiation direction, the high beam unit of the one combination unit executes road surface drawing, and the other combination unit is directed in the first irradiation direction.
10. The vehicle lamp according to item 9, wherein each of the pair of combination units includes:
   a support that supports the low beam unit and the high beam unit,
   an actuator that drives the support to switch between the first irradiation direction and the second irradiation direction.
11. The vehicle lamp according to item 9 or 10, wherein the high beam unit includes a pattern generator, and
   wherein the pattern generator is configured in such a way that, when one combination unit is directed in the second irradiation direction, one part of the pattern generator of the one combination unit generates a road surface drawing pattern and another part of the pattern generator generates an auxiliary light distribution pattern for complementing the low beam light distribution pattern.
12. The vehicle lamp according to item 11, wherein the auxiliary light distribution pattern is defined to at least partially illuminate a portion of the predefined low beam region deviated from the low beam light distribution pattern when the one combination unit is directed in the second irradiation direction.
13. The vehicle lamp according to item 12, wherein the auxiliary light distribution pattern is defined to form at least an elbow point of a cut-off line of the low beam light distribution pattern.
14. The vehicle lamp according to any one of items 9 to 13, wherein the pair of combination units are configured to switch, when a predetermined event occurs while the pair of combination units are directed in the first irradiation direction and the high beam unit projects the high beam light distribution pattern, the one combination unit from the first irradiation direction to the second irradiation direction to execute road surface drawing to alert of the event.
15. The vehicle lamp according to any one of items 9 to 14, wherein the one combination unit is mounted on a first headlamp unit of a pair of headlamp units, and the other combination unit is mounted on a second headlamp unit of the pair of headlamp units.
16. A control apparatus for a vehicle lamp, wherein the vehicle lamp includes a combination unit including a low beam unit that projects a low beam light distribution pattern and a high beam unit that projects a high beam light distribution pattern above the low beam light distribution pattern, the high beam unit being capable of road surface drawing, and the combination unit being capable of switching between a first irradiation direction in which the low beam light distribution pattern irradiates a predefined low beam region and a second irradiation direction lower than the first irradiation direction,
   wherein the control apparatus is configured to cause the high beam unit to execute road surface drawing and illuminate a road surface to complement the low beam light distribution pattern, when the combination unit is directed in the second irradiation direction.
17. A computer program for controlling a vehicle lamp, wherein the vehicle lamp includes a combination unit including a low beam unit that projects a low beam light distribution pattern and a high beam unit that projects a high beam light distribution pattern above the low beam light distribution pattern, the high beam unit being capable of road surface drawing, and the combination unit being capable of switching between a first irradiation direction in which the low beam light distribution pattern irradiates a predefined low beam region and a second irradiation direction lower than the first irradiation direction,
   wherein the computer program, when executed by a computer, causes the high beam unit to execute road surface drawing and illuminate a road surface to complement the low beam light distribution pattern, when the combination unit is directed in the second irradiation direction.
18. A non-transitory computer-readable medium that stores a computer program for controlling a vehicle lamp, wherein the vehicle lamp includes a combination unit including a low beam unit that projects a low beam light distribution pattern and a high beam unit that projects a high beam light distribution pattern above the low beam light distribution pattern, the high beam unit being capable of road surface drawing, and the combination unit being capable of switching between a first irradiation direction in which the low beam light distribution pattern irradiates a predefined low beam region and a second irradiation direction lower than the first irradiation direction,
   wherein the computer program, when executed by a computer, causes the high beam unit to execute road surface drawing and illuminate a road surface to complement the low beam light distribution pattern, when the combination unit is directed in the second irradiation direction.

### INDUSTRIAL APPLICABILITY

The present invention can be used in, for example, vehicle lamps that can be mounted on vehicles such as automobiles. The present invention can also be used in a control apparatus for such vehicle lamps.

### REFERENCE SIGNS LIST

10 vehicle lamp, 11A, 11B combination unit, 18 low beam unit, 20 high beam unit, 22 pattern generator, 26 support, 30 actuator, 32 cut-off line, 34 elbow point, 46 road surface drawing pattern, 58 auxiliary light distribution pattern, Lo low beam light distribution pattern, Hi high light distribution pattern

## Claims

1. A vehicle lamp comprising:
a first combination unit including a low beam unit that projects a low beam light distribution pattern and a high beam unit that projects a high beam light distribution pattern above the low beam light distribution pattern, the high beam unit being capable of road surface drawing, and the first combination unit being capable of switching between a first irradiation direction in which the low beam light distribution pattern irradiates a predefined low beam region and a second irradiation direction lower than the first irradiation direction,
wherein the high beam unit is configured to execute road surface drawing and illuminate a road surface to complement the low beam light distribution pattern, when the first combination unit is directed in the second irradiation direction.

2. The vehicle lamp according to claim 1,
wherein the first combination unit includes:
a support that supports the low beam unit and the high beam unit,
an actuator that drives the support to switch between the first irradiation direction and the second irradiation direction.

3. The vehicle lamp according to claim 1,
wherein the high beam unit includes a pattern generator, and
wherein the pattern generator is configured to generate a road surface drawing pattern with one part of the pattern generator and generate an auxiliary light distribution pattern for complementing the low beam light distribution pattern with another part of the pattern generator, when the first combination unit is directed in the second irradiation direction.

4. The vehicle lamp according to claim 3,
wherein the auxiliary light distribution pattern is defined to at least partially illuminate a portion of the predefined low beam region deviated from the low beam light distribution pattern when the first combination unit is directed in the second irradiation direction.

5. The vehicle lamp according to claim 4,
wherein the auxiliary light distribution pattern is defined to form at least an elbow point of a cut-off line of the low beam light distribution pattern.

6. The vehicle lamp according to claim 1, wherein the first combination unit is configured to switch, when a predetermined event occurs while the first combination unit is directed in the first irradiation direction and the high beam unit projects the high beam light distribution pattern, the first combination unit from the first irradiation direction to the second irradiation direction to execute road surface drawing to alert of the event.

7. The vehicle lamp according to any one of claims 1 to 6, further comprising: a second combination unit paired with the first combination unit and including a low beam unit that projects a low beam light distribution pattern and a high beam unit that projects a high beam light distribution pattern above the low beam light distribution pattern, the high beam unit being capable of road surface drawing, and the second combination unit being capable of switching between a first irradiation direction in which the low beam light distribution pattern irradiates a predefined low beam region and a second irradiation direction lower than the first irradiation direction,
wherein the second combination unit is configured to direct the second combination unit in the first irradiation direction when the first combination unit is directed in the second irradiation direction.

8. The vehicle lamp according to claim 7,
wherein the first combination unit is mounted on a first headlamp unit of a pair of headlamp units, and the second combination unit is mounted on a second headlamp unit of the pair of headlamp units.

9. A vehicle lamp comprising: a pair of combination units each including a low beam unit that projects a low beam light distribution pattern and a high beam unit that projects a high beam light distribution pattern above the low beam light distribution pattern, the high beam unit being capable of road surface drawing, and each combination unit being capable of switching between a first irradiation direction in which the low beam light distribution pattern irradiates a predefined low beam region and a second irradiation direction lower than the first irradiation direction,
wherein the pair of combination units are configured such that, when one combination unit is directed in the second irradiation direction, the high beam unit of the one combination unit executes road surface drawing, and the other combination unit is directed in the first irradiation direction.

10. A control apparatus for a vehicle lamp, wherein the vehicle lamp includes a combination unit including a low beam unit that projects a low beam light distribution pattern and a high beam unit that projects a high beam light distribution pattern above the low beam light distribution pattern, the high beam unit being capable of road surface drawing, and the combination unit being capable of switching between a first irradiation direction in which the low beam light distribution pattern irradiates a predefined low beam region and a second irradiation direction lower than the first irradiation direction,
wherein the control apparatus is configured to cause the high beam unit to execute road surface drawing and illuminate a road surface to complement the low beam light distribution pattern, when the combination unit is directed in the second irradiation direction.

11. A computer program for controlling a vehicle lamp, wherein the vehicle lamp includes a combination unit including a low beam unit that projects a low beam light distribution pattern and a high beam unit that projects a high beam light distribution pattern above the low beam light distribution pattern, the high beam unit being capable of road surface drawing, and the combination unit being capable of switching between a first irradiation direction in which the low beam light distribution pattern irradiates a predefined low beam region and a second irradiation direction lower than the first irradiation direction,
wherein the computer program, when executed by a computer, causes the high beam unit to execute road surface drawing and illuminate a road surface to complement the low beam light distribution pattern, when the combination unit is directed in the second irradiation direction.
